# EUROPEAN PATENT SPECIFICATION

(11) **EP 3 489 777 B1**
(45) Date of publication and mention of the grant of the patent: **09.06.2021**
(21) Application number: 18193428.2
(22) Date of filing: 10.09.2018
(51) Int. Cl.: G05B 19/042, G06F 9/48

(54) **CONTROL DEVICE, CONTROL METHOD, AND PROGRAM**
STEUERUNGSVORRICHTUNG, STEUERUNGSVERFAHREN UND PROGRAMM
PROCÉDÉ, DISPOSITIF ET PROGRAMME DE COMMANDE

(30) Priority: 27.11.2017 JP 2017226972
(43) Date of publication of application: 29.05.2019
(73) Proprietor: OMRON CORPORATION, Kyoto-shi, Kyoto 600-8530 (JP)
(72) Inventor: NAGATA, Yuta, Kyoto-shi, Kyoto 600-8530 (JP); OKAMURA, Kotaro, Kyoto-shi, Kyoto 600-8530 (JP); DEKI, Jintaro, Kyoto-shi, Kyoto 600-8530 (JP)
(74) Representative: Becker & Kurig Partnerschaft Patentanwälte PartmbB

(56) References cited:
- EP-A2- 2 942 682
- US-A1- 2006 277 026
- US-A1- 2012 198 464

## Description

### BACKGROUND

### Technical Field

The disclosure relates to a technique for stopping a server function in an industrial control device according to memory usage.

### Related Art

Factory automation (FA) systems that automate production processes are popular in various production sites. An FA system is composed of various industrial driving machines. The industrial driving machines include, for example, a moving table for moving a workpiece, or a conveyor for conveying a workpiece, or an arm robot for moving a workpiece to a predetermined destination, and so on. These driving machines are controlled by an industrial control device (hereinafter also "controller") such as a programmable logic controller (PLC) or a robot controller or the like.

In order to monitor a state of the industrial driving machine, it is necessary to access data in the controller. Regarding techniques for accessing the data in the controller, Japanese Laid-open No. 2012-018541 discloses a display device "capable of easily collecting data of an external machine regardless of type or connection of the external machine."

Recently, controllers equipped with a server function are getting popular. In response to an access request from an external machine, the controller exchanges data with the external machine by utilizing a portion of a memory region of a memory. When external access requests increase, memory usage may increase more than intended. At this moment, although the controller can deny the external access requests when stopping all of its functions, in this case, the FA system itself may also stop. Since significant opportunity loss occurs when the FA system stops, it is desired to make every effort to prevent the FA system from stopping.

The disclosure provides a technique for restricting a server function without affecting a driving machine in the case where memory usage is increased.

US 2006/277026 A1 discloses a technique for facilitating editing of editable code in an interface device or similar apparatus. Properties of device elements are enumerated by a general purpose engine resident on the interface device. The general purpose engine enumerates the properties in response to a query in a design-time environment. The device element includes a specific property type and editable code consistent with the property type. A server module on the device serves the editable code and an editing environment from the interface device to a configuration station. The code can be edited on the configuration station in the editing environment and restored to the interface device. The technique alleviates the need for separate editing software or storage of the editable code in any location other than on the interface device itself.

### SUMMARY

The present invention is provided by the appended claims. In an example of the disclosure, a control device for controlling a driving machine and having a server section for communicating with one or more external machines includes: a memory; a program execution section for, based on receipt of an order to execute a control program of the driving machine, extracting in the memory data required for executing the control program, and controlling the driving machine in accordance with the control program; a function execution section for executing a function of the server section utilizing a memory region on the memory in response to a request from the one or more external machines; a monitoring section for monitoring usage of the memory; and a restriction section, based on the fact that the usage has exceeded a predetermined first threshold, executing processing for restricting the function of the server section.

According to the disclosure, based on the fact that the usage of the memory has exceeded the first threshold, the control device restricts the function of the server section. At this moment, since the function of the server section is only restricted, execution of the control program of the driving machine is not stopped. Accordingly, the control device is capable of restricting the function of the server section without affecting the driving machine in the case where the usage of the memory is increased.

In an example of the disclosure, in the case where the above usage has exceeded the above first threshold, the above restriction section restricts the above function of the above server section in a state in which execution of the above control program is maintained.

According to the disclosure, in the control device, since execution of the control program is maintained while the function of the server section is restricted, the function of the server section can be restricted without stopping the driving machine.

In an example of the disclosure, the above restriction section restricts the above function of the above server section after the memory region on the above memory that has been used by the above server section is released.

According to the disclosure, accordingly, the control device is capable of reducing the usage of the memory.

In an example of the disclosure, the above control device is configured to be electrically connected to an external memory medium. The above restriction section writes to the above external memory medium, as a log, the fact that the above function of the above server section is restricted.

According to the disclosure, by writing the log of stop of the server function to the external memory medium, the control device is capable of suppressing use of the memory.

In an example of the disclosure, based on the fact that the above usage has exceeded a second threshold smaller than the above first threshold, the above restriction section outputs a warning.

According to the disclosure, since the warning is output before the usage of the memory reaches an upper limit, a user can grasp in advance that the usage of the memory is about to reach the upper limit.

In an example of the disclosure, the above server section communicates with the above one or more external machines by utilizing a communication protocol in accordance with an Object Linking and Embedding for Process Control Unified Architecture (OPC-UA).

According to the disclosure, by utilizing the communication protocol in accordance with the OPC-UA, data exchange between the control device and the external machine can be realized without depending upon an operating system (OS) or a vendor.

In an example of the disclosure, based on receipt of an instruction to remove the restriction on the above function of the above server section, the above restriction section removes the restriction.

According to the disclosure, the control device can return from the state in which the server function is restricted.

In another example of the disclosure, a control method of a control device of a driving machine is provided. The above control device includes a server section for communicating with one or more external machines. The above control method includes the following steps. Based on receipt of an order to execute a control program of the above driving machine, data required for executing the control program is extracted in a memory of the above control device, and the above driving machine is controlled in accordance with the control program. A function in the above server section utilizing a memory region on the above memory is executed in response to a request from the above one or more external machines. Usage of the above memory is monitored. Based on the fact that the above usage has exceeded a predetermined first threshold, processing for restricting the above function of the above server section is executed.

According to the disclosure, in the control method of the control device, based on the fact that the usage of the memory has exceeded the first threshold, the function of the server section is restricted. At this moment, since the function of the server section is only restricted, execution of the control program of the driving machine is not stopped. Accordingly, the control device is capable of restricting the function of the server section without affecting the driving machine in the case where the usage of the memory is increased.

In another example of the disclosure, a program executed by a control device of a driving machine is provided. The above control device includes a server section for communicating with one or more external machines. The above program causes the above control device to execute the following steps. Based on receipt of an order to execute a control program of the above driving machine, the above control device extracts in a memory of the above control device data required for executing the control program, and controls the above driving machine in accordance with the control program. The above control device executes a function in the above server section utilizing a memory region on the memory of the above control device in response to a request from the above one or more external machines. The control device monitors usage of the above memory. Based on the fact that the above usage has exceeded a predetermined first threshold, the control device executes processing for restricting the above function of the above server section.

According to the disclosure, in the program of the control device, based on the fact that the usage of the memory has exceeded the first threshold, the function in the server section that utilizes the memory region on the memory is restricted. At this moment, since the function of the server section is only restricted, execution of the control program of the driving machine is not stopped. Accordingly, the control device is capable of restricting the function of the server section without affecting the driving machine in the case where the usage of the memory is increased.

In one aspect, the server function can be restricted without affecting the driving machine in the case where the usage of the memory is increased.

### BRIEF DESCRIPTION OF THE DRAWINGS

FIG. 1 illustrates a configuration example of an FA system according to an embodiment.
FIG. 2 illustrates a list of variables included in a control program and a list of variables permitted to be public.
FIG. 3 is a sequence diagram illustrating a dataflow for realizing Subscription processing.
FIG. 4 illustrates an example of an object group for realizing the Subscription processing.
FIG. 5 illustrates a system flow of an OPC-UA server and an OPC-UA client.
FIG. 6 illustrates an example of transition of memory usage.
FIG. 7 illustrates an example of a functional configuration of a controller according to an embodiment.
FIG. 8 is a schematic diagram illustrating an example of a hardware configuration of the controller according to an embodiment.
FIG. 9 is a flowchart indicating part of processing realized by the OPC-UA server in the controller according to an embodiment.

### DESCRIPTION OF THE EMBODIMENTS

Embodiments according to the disclosure are hereinafter explained with reference to the drawings. In the following explanation, the same parts and components are denoted by the same reference numerals, and they also have the same names and functions. Accordingly, detailed explanation thereof will not be repeated.

### <A. Application Example>

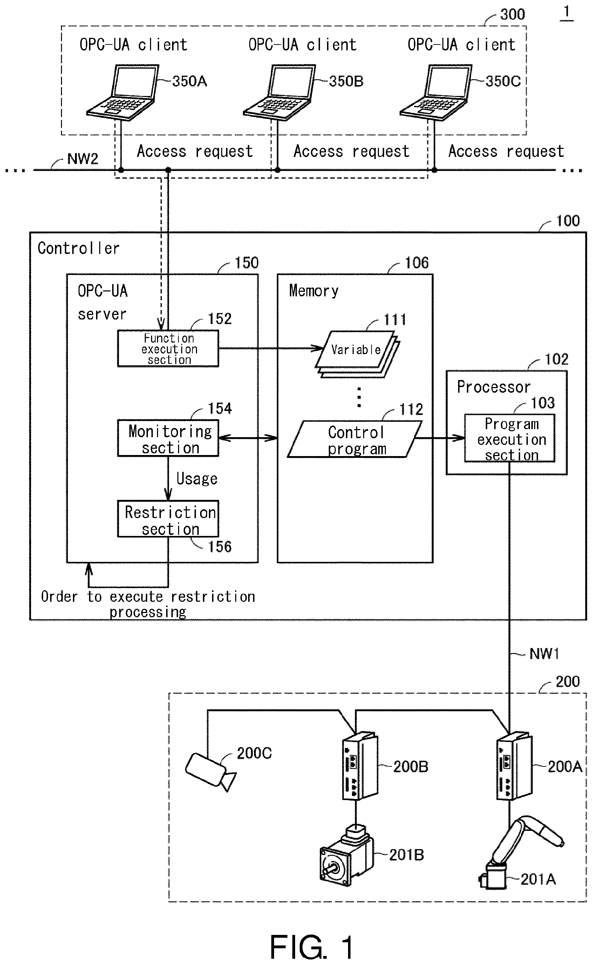

Referring to FIG. 1, an application example of the disclosure is explained. FIG. 1 illustrates a configuration example of an FA system 1.

The FA system 1 is a system for automating a production process. In the example of FIG. 1, the FA system 1 is composed of a controller 100, a driving machine 200 and an external machine 300.

The controller 100 and the driving machine 200 are connected to a field network NW1. For the field network NW1, a network in which data arrival time is guaranteed and fixed-cycle communication is performed may be adopted. Known examples of such networks in which fixed-cycle communication is performed include EtherCAT (registered trademark), EtherNet/IP (registered trademark), DeviceNet (registered trademark), CompoNet (registered trademark) and so on.

The driving machine 200 includes various industrial machines for automating a production process. As an example, the driving machine 200 includes, a robot controller 200A controlling an arm robot 201A, or a servo driver 200B controlling a servomotor 201B, or a visual sensor 200C for photographing a workpiece, or other machine used in the production process, or the like.

The controller 100 and the external machine 300 are connected to a field network NW2. For the field network NW2, for example, a network in accordance with a communication standard capable of realizing data exchange without depending on the type of vendor or operating system (OS) or the like may be adopted. Known examples of such a communication standard include Object Linking and Embedding for Process Control Unified Architecture (OPC-UA), and so on. In the following, explanation is given on the premise that the communication standard is OPC-UA. However, the communication standard adopted in the field network NW2 is not limited to OPC-UA.

In order to realize communication in accordance with OPC-UA, the controller 100 functions as a server, and the external machine 300 functions as a client. More specifically, an OPC-UA server 150 (server section) having a server function is installed on the controller 100. "OPC-UA server" mentioned herein is an application (program) functioning as a communication driver. In addition, the "server function" of the OPC-UA server refers to a function utilizing a memory region on a memory 106 of the controller 100, particularly, a function for communicating with the external machine 300 and realizing data exchange with the external machine 300.

In addition, OPC-UA clients 350A to 350C having a function of communicating with the OPC-UA server 150 are installed on the external machine 300. "OPC-UA client" mentioned herein is an application sending a communication request (access request) to the OPC-UA server 150. In the following, the OPC-UA clients 350A to 350C are also collectively referred to as OPC-UA clients 350.

By sending the access request to the OPC-UA server 150, the OPC-UA clients 350 acquire from the OPC-UA server 150 a variable 111 managed in the controller 100, and graphically display a state of the controller 100 or the driving machine 200 based on the variable 111. The external machine 300 functioning as the OPC-UA clients 350 includes, for example, a human machine interface (HMI), a personal computer (PC), a smartphone, a tablet terminal, or other information processing device having a display function.

The controller 100 includes, in addition to the OPC-UA server 150, a processor 102 and the memory 106. The processor 102 includes a program execution section 103 as a functional configuration. The OPC-UA server 150 includes, as a functional configuration, a function execution section 152, a monitoring section 154 and a restriction section 156.

Based on receipt of an order to execute a control program 112, the program execution section 103 extracts in the memory 106 various data required for executing the control program 112, and controls the driving machine 200 in accordance with the control program 112. In this way, the memory 106 functions as a working memory and temporarily stores therein the various data required for executing the control program 112.

Signals (typically input signals and output signals) exchanged between the controller 100 and the driving machine 200 are respectively treated as the variables 111 in the control program 112. That is, these realistic signals and the corresponding variables 111 in the control program 112 are essentially the same.

The function execution section 152 executes the function (i.e., server function) utilizing the memory region on the memory 106 in response to a request from any of the external machine 300. As an example, the server function includes a function of reading/writing the variable 111 designated by the access request, and so on. The data extracted in the memory 106 due to execution of the server function includes, for example, the variable 111 of the control program 112 designated by the access request, or an order (program) for acquiring the variable 111, and so on.

The monitoring section 154 monitors usage of the memory 106, and regularly outputs the usage to the restriction section 156. Since a portion of the memory region of the memory 106 is utilized when the access request from the external machine 300 is received, as the access requests increase, the usage of the memory 106 increases.

The restriction section 156 executes processing (hereinafter also "restriction processing") for restricting the server function of the OPC-UA server 150 based on the fact that the usage of the memory 106 has exceeded a predetermined threshold (first threshold). The restriction processing includes not only processing that directly limits the server function of the OPC-UA server 150 but also processing that indirectly limits the server function. As an example, the restriction processing of the restriction section 156 includes setting a state of the OPC-UA server 150 to abnormal state, or making an error response to the access request made by the external machine 300 toward the OPC-UA server 150, or processing that stops the server function performed by the OPC-UA server 150, and so on. The restriction section 156 only restricts the server function of the OPC-UA server 150, and thus execution of the control program 112 is not stopped. Accordingly, the controller 100 is capable of restricting the server function without affecting driving of the driving machine 200.

Moreover, although the above has explained an example where the FA system 1 includes one controller 100 (OPC-UA server 150), the FA system 1 may include two or more controllers 100 (OPC-UA servers 150).

Moreover, although the above has explained an example where the FA system 1 includes three external machines 300 (OPC-UA clients 350), it suffices if the FA system 1 includes at least external machine 300 (OPC-UA client 350).

In addition, although the above has explained the OPC-UA server 150 as an example of a server for realizing communication with the external machine 300, the OPC-UA server 150 may be replaced with any arbitrary type of server as long as the server is capable of realizing communication with the external machine 300. As an example, the OPC-UA server 150 may be replaced with a database (DB) server such as a Structured Query Language (SQL) server, a File Transfer Protocol (FTP) server, or a web server such as a Hypertext Transfer Protocol (HTTP) server.

In addition, although FIG. 1 has explained an example where the monitoring section 154 and the restriction section 156 are implemented in the OPC-UA server 150, the monitoring section 154 and the restriction section 156 may be implemented outside the OPC-UA server 150. By being implemented in this way, the monitoring section 154 is capable of individually monitoring the usage of the memory 106 for each of a plurality of server sections. In addition, the restriction section 156 is capable of individually executing the function restriction processing with respect to the server section in which the usage of the memory 106 has exceeded the predetermined threshold.

### <B. Setting of Public Variable>

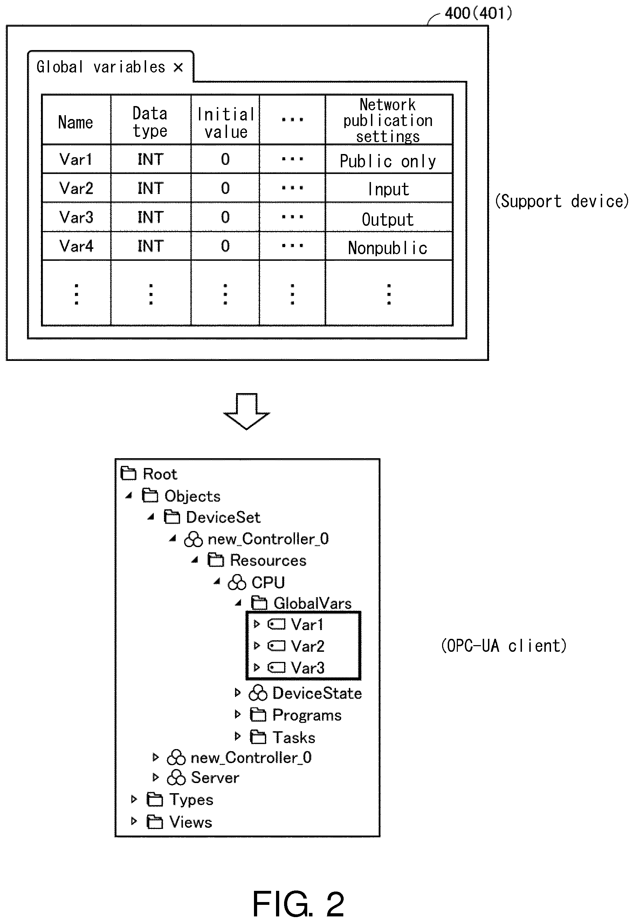

Referring to FIG. 2, a method is explained of setting a variable (hereinafter also "public variable") among the variables included in the control program 112 that is public to the external machine 300. FIG. 2 illustrates a list of the variables included in the control program 112 and a list of variables permitted to be public.

A designer of the control program 112 can perform setting of the public variable with respect to the OPC-UA clients 350 on a support device 400 in advance. The support device 400 is, for example, a PC, a tablet terminal, or other information processing device having the display function. A development tool of the control program 112 may be installed on the support device 400. The designer designs the control program 112 on the development tool, and installs the designed control program 112 on the controller 100. The development tool of the control program 112 is, for example, "Sysmac Studio" made by OMRON Corporation.

FIG. 2 shows a setting screen 401 of the public variable. The designer can set, on the setting screen 401, attributes regarding each variable defined in the control program 112. The settable attributes include, for example, variable name, variable type, variable initial value, and publication attribute with respect to the OPC-UA clients 350. The publication attribute may be set to any of "public only," "input," "output," and "nonpublic." A variable set to "public only," "input" or "output" is public to the OPC-UA clients 350, and a variable set to "nonpublic" is not public to the OPC-UA clients 350.

In the example of FIG. 2, a variable "Varl" with a publication attribute set to "public only," a variable "Var2" with a publication attribute set to "input," and a variable "Var3" with a publication attribute set to "output" are displayed on the OPC-UA clients 350. A variable "Var4" with a publication attribute set to "nonpublic" is not displayed on the OPC-UA clients 350.

Regarding the variable "Varl" set to "public only," the OPC-UA clients 350 can only specify the variable name and cannot acquire the value of the variable. Regarding the variable "Var2" set to "input," the OPC-UA clients 350 can read but cannot rewrite the value of the variable. Regarding the variable "Var3" set to "output," the OPC-UA clients 350 can both read and rewrite the value of the variable.

### <C. Public Variable Acquisition Processing>

A user of the external machine 300 can design various programs for monitoring the state of the controller 100 or the driving machine 200 by referring to the public variable. As an example, the user of the external machine 300 can design a monitoring program or the like displaying the driving machine 200 pertaining to a variable of a monitored object in the case where the variable shows an abnormal value.

Based on execution of access processing for the public variable by execution of the monitoring program, the OPC-UA clients 350 send to the OPC-UA server 150 an access request for the public variable. The access request includes, for example, a Read request, a Write request, or a Subscription request. In the case where the access request is a Read request, the OPC-UA server 150 sends once to the OPC-UA clients 350 the value of the public variable to be accessed. In the case where the access request is a Write request, the OPC-UA server 150 rewrites the public variable to be accessed to a designated value. In the case where the access request is a Subscription request, the OPC-UA server 150 regularly sends the value of the public variable to be accessed.

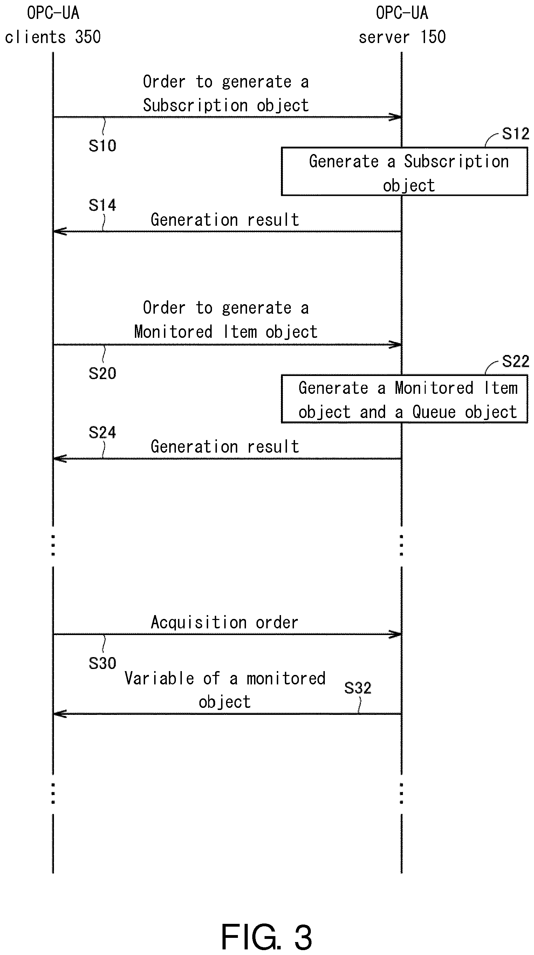

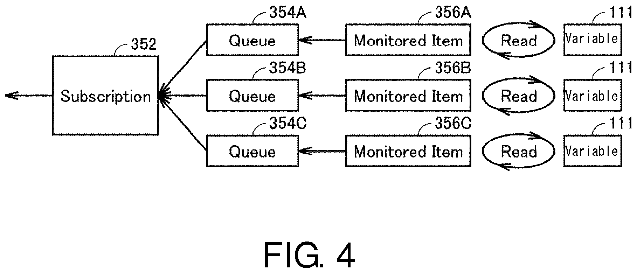

In the following, Subscription processing that regularly sends the designated public variable is explained with reference to FIG. 3 and FIG. 4. FIG. 3 is a sequence diagram illustrating a dataflow for realizing the Subscription processing. FIG. 4 illustrates an example of an object group for realizing the Subscription processing.

In step S10, based on execution of an order to generate a Subscription object, the OPC-UA clients 350 send the generation order to the OPC-UA server 150. The "object" mentioned herein means an instance generated from a class. In the generation order, for example, a period for notifying the OPC-UA clients 350 of the value of the public variable is defined.

In step S12, based on receipt of the generation order from the OPC-UA clients 350, the OPC-UA server 150 generates a Subscription object 352. The Subscription object 352 has a function of sending data in later-described queues 354A to 354C to the OPC-UA clients 350 in accordance with the designated notification period.

In step S14, the OPC-UA server 150 sends, as a generation result of the Subscription object, information (for example, identifier (ID)) for identifying the Subscription object 352, to the OPC-UA clients 350.

In step S20, based on execution of an order to generate a Monitored Item object, the OPC-UA clients 350 send the generation order to the OPC-UA server 150. The generation order includes the ID of the Subscription object 352, the public variable of the monitored object, a sampling period of the public variable and size of a queue object.

In step S22, based on receipt of the generation order from the OPC-UA clients 350, the OPC-UA server 150 generates a Queue object 354A and a Monitored Item object 356A in association with the Subscription object 352 designated by the generation order.

The Monitored Item object 356A has a function of acquiring the variable 111 of the monitored object designated by the above generation order for each sampling period designated by the generation order, and storing the variable 111 in the Queue object 354A. The Queue object 354A is of a size designated by the above generation order, and has a function of outputting to the Subscription object 352 the stored public variable in first-in-first-out (FIFO) form.

In step S24, the OPC-UA server 150 sends a generation result of the Monitored Item object 356A to the OPC-UA clients 350. The generation result indicates whether or not the Monitored Item object 356A is normally generated (True/False).

Every time the OPC-UA server 150 receives from the OPC-UA clients 350 the order to generate a Monitored Item object, the OPC-UA server 150 executes the same processing as in steps S20, S22 and S24. That is, every time the generation order is issued, a Monitored Item object and a Queue object are generated. In the example of FIG. 4, as a result, three Queue objects 354A to 354C and three Monitored Item objects 356A to 356C are generated.

In step S30, based on execution of an order to acquire the public variable of the monitored object, the OPC-UA clients 350 send the acquisition order to the OPC-UA server 150.

In step S32, based on receipt of the order to acquire the public variable of the monitored object from the OPC-UA clients 350, the OPC-UA server 150 executes the function of the Subscription object 352. Accordingly, the Subscription object 352 acquires the public variable from the Queue objects 354A to 354C and sends the public variable to the OPC-UA clients 350 for each set notification period.

### <D. Restriction Processing on OPC-UA Server 150>

As explained in FIG. 1, in the OPC-UA server 150, based on the fact that the usage of the memory 106 has exceeded the predetermined threshold, restriction processing on the server function of the OPC-UA server 150 is executed. Examples of such restriction processing include processing that causes the state of the OPC-UA server 150 to transit from normal state to abnormal state, or processing that makes an error response to the access request made by the external machine 300 toward the OPC-UA server 150, or processing that stops the server function performed by the OPC-UA server 150, and so on.

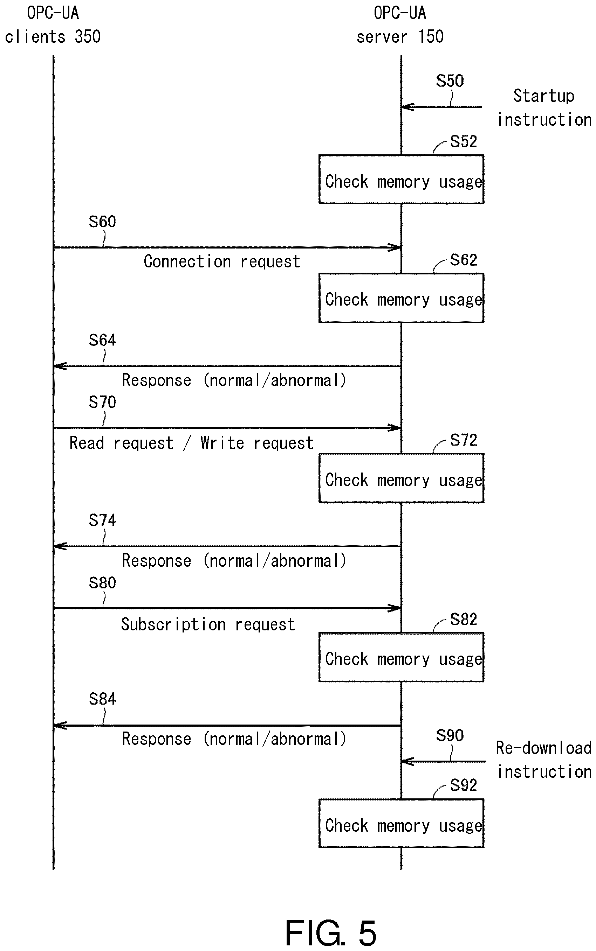

In the following, an example of timing at which the restriction processing is executed is explained with reference to FIG. 5. FIG. 5 illustrates a system flow of the OPC-UA server 150 and the OPC-UA clients 350.

In step S50, it is assumed that the OPC-UA server 150 has received a startup instruction. The startup instruction is issued from, for example, a control engine of the controller 100.

In step S52, as the above function execution section 152 (see FIG. 1), the OPC-UA server 150 extracts the above public variable in the memory 106 of the controller 100. At this moment, the OPC-UA server 150 extracts as many public variables as possible in the memory 106 within a range of free space of the memory 106.

In addition, as the above monitoring section 154 (see FIG. 1), the OPC-UA server 150 checks the usage of the memory 106. In the case where the usage of the memory 106 does not exceed the predetermined threshold, the OPC-UA server 150 sets its state to normal state. In the case where the usage of the memory 106 exceeds the predetermined threshold, as the above restriction section 156 (see FIG. 1), the OPC-UA server 150 executes the server function restriction processing. In the restriction processing in step S52, the OPC-UA server 150 sets its state to abnormal state. At this moment, the OPC-UA server 150 may stop part or all of its server function.

In step S60, it is assumed that the OPC-UA clients 350 have sent a communication connection request to the OPC-UA server 150.

In step S62, based on receipt of the communication connection request from the OPC-UA clients 350, the OPC-UA server 150 executes communication connection processing with the OPC-UA clients 350. At this moment, as the above monitoring section 154, the OPC-UA server 150 checks the usage of the memory 106.

In step S64, in the case where the usage of the memory 106 does not exceed the predetermined threshold, the OPC-UA server 150 sends to the OPC-UA clients 350 a response indicating normal as a response to the communication connection request in step S60. In the case where the usage of the memory 106 exceeds the predetermined threshold, as the above restriction section 156, the OPC-UA server 150 executes the server function restriction processing. In the restriction processing in step S64, the OPC-UA server 150 sends to the OPC-UA clients 350 a response indicating abnormal as the response to the communication connection request in step S60.

In step S70, it is assumed that the OPC-UA clients 350 have sent to the OPC-UA server 150 a Read request or Write request for the public variable.

In step S72, as the above monitoring section 154, the OPC-UA server 150 checks the usage of the memory 106 if receiving the Read request from the OPC-UA clients 350. In the case where the usage of the memory 106 does not exceed the predetermined threshold, as the above function execution section 152, the OPC-UA server 150 executes processing for reading the designated public variable. Meanwhile, when the request from the OPC-UA clients 350 is the Write request, as the above function execution section 152, the OPC-UA server 150 executes processing for rewriting the designated public variable to the designated value.

In step S74, in the case where the usage of the memory 106 does not exceed the predetermined threshold, the OPC-UA server 150 sends to the OPC-UA clients 350 a response indicating normal as a response to the Read request or Write request in step S70. In the case where the usage of the memory 106 exceeds the predetermined threshold, as the above restriction section 156, the OPC-UA server 150 executes the server function restriction processing. In the restriction processing in step S74, the OPC-UA server 150 sends to the OPC-UA clients 350 a response indicating abnormal as the response to the Read request or Write request in step S70.

In step S80, it is assumed that the OPC-UA clients 350 have sent to the OPC-UA server 150 a Subscription request for the public variable.

In step S82, as the above monitoring section 154, the OPC-UA server 150 checks the usage of the memory 106 if receiving the Subscription request from the OPC-UA clients 350. In the case where the usage of the memory 106 does not exceed the predetermined threshold, the OPC-UA server 150 executes the Subscription processing as explained in FIG. 3 and FIG. 4 above.

In step S84, in the case where the usage of the memory 106 does not exceed the predetermined threshold, the OPC-UA server 150 sends to the OPC-UA clients 350 a response indicating normal as a response to the Subscription request in step S80. On the other hand, in the case where the usage of the memory 106 exceeds the predetermined threshold, as the above restriction section 156, the OPC-UA server 150 executes the server function restriction processing. In the restriction processing in step S84, the OPC-UA server 150 sends to the OPC-UA clients 350 a response indicating abnormal as the response to the Subscription request in step S80.

In step S90, it is assumed that the OPC-UA server 150, as the above function execution section 152, has received a re-download instruction for the public variable. The re-download instruction is issued from the control engine of the controller 100 in cases such as where the public variable is changed.

In step S92, as the above monitoring section 154, the OPC-UA server 150 checks the usage of the memory 106 based on receipt of the re-download instruction. In the case where the usage of the memory 106 does not exceed the predetermined threshold, the OPC-UA server 150 sets its state to normal state. In the case where the usage of the memory 106 exceeds the predetermined threshold, as the above restriction section 156, the OPC-UA server 150 executes the server function restriction processing. In the restriction processing in step S92, the OPC-UA server 150 sets its state to abnormal state. At this moment, the OPC-UA server 150 may stop part or all of its server function.

### <E. Monitoring Processing for Usage of Memory 106>

Based on receipt of the access request for the public variable from the OPC-UA clients 350, the OPC-UA server 150 executes processing for accessing the public variable. At this moment, the OPC-UA server 150 reads and writes the public variable by extracting in the memory 106 various data required for accessing the public variable. For example, in the case where the access request is the above Subscription request, the OPC-UA server 150 generates the above Subscription object, the above Queue object and the above Monitored Item object in the memory 106 in order to realize regular reading of the public variable.

In this way, as the access requests for the public variable from the OPC-UA clients 350 increase, the usage of the memory 106 increases. Particularly, in the case where OPC-UA server 150 receives an unintended malicious access request from the external machine 300, since all variables are accessed, the usage of the memory 106 increases. When the usage of the memory 106 exceeds an upper limit, there is possibility that the control program 112 for driving the driving machine 200 may unexpectedly stop. Hence, the OPC-UA server 150 monitors the usage of the memory 106 so as to prevent the control program 112 from stopping.

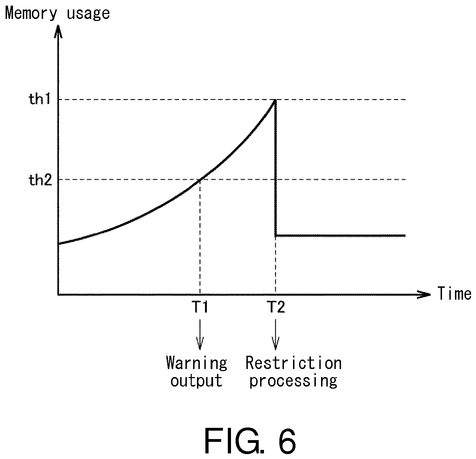

In the following, the processing performed by the OPC-UA server 150 for monitoring the memory 106 is explained with reference to FIG. 6. FIG. 6 illustrates an example of transition of the usage of the memory 106.

As shown in FIG. 6, thresholds th1 and th2 are set with respect to the memory usage. The threshold th1 is the upper limit and is greater than the threshold th2. The thresholds th1 and th2 may be set in advance or may be arbitrarily set by the user.

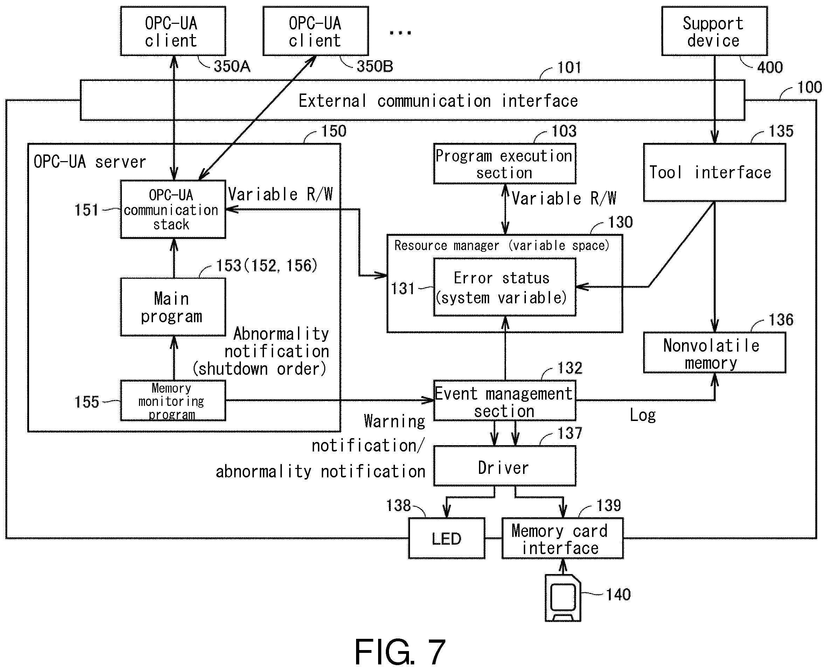

At time T1, it is assumed that the usage of the memory 106 has exceeded the threshold th2. Based on the fact that the usage of the memory 106 has exceeded the threshold th2 (second threshold), the OPC-UA server 150 outputs a warning indicating that the usage of the memory 106 approaches the threshold th1 being the upper limit. The warning is output by an arbitrary method. As an example, the OPC-UA server 150 may output the warning as a log, or may output the warning by lighting a later-described light emitting diode (LED) 138 (see FIG. 7), or may output the warning by sound.

At time T2, it is assumed that the usage of the memory 106 has exceeded the threshold th1. Based on the fact that the usage of the memory 106 has exceeded the threshold th1 (first threshold), the OPC-UA server 150 executes the restriction processing for restricting the server function of the OPC-UA server 150. Examples of such restriction processing include the processing that causes the state of the OPC-UA server 150 to transit from normal state to abnormal state, or the processing that makes an error response to the access request made by the external machine 300 toward the OPC-UA server 150, or the processing (shutdown processing) that stops the server function performed by the OPC-UA server 150, and so on. At this moment, the OPC-UA server 150 maintains execution of the control program 112 of the driving machine 200. Accordingly, the OPC-UA server 150 is capable of only restricting its own server function without hindering driving of the driving machine 200.

The OPC-UA server 150 may restrict the server function after the memory region on the memory 106 that has been used by the OPC-UA server 150 itself is released. Accordingly, the OPC-UA server 150 is capable of reducing the usage of the memory 106 and capable of reliably preventing stop of execution of the control program 112 of the driving machine 200. In the example of FIG. 6, at time T2 when the memory region on the memory 106 is released, the usage of the memory 106 is considerably reduced.

The OPC-UA server 150 may write to an external memory medium such as a later-described memory card 140 (see FIG. 7) or the like, as a log, the fact that the server function is restricted. By writing the log to the external memory medium, the OPC-UA server 150 is capable of reducing the usage of the memory 106. In addition, the OPC-UA server 150 notifies the OPC-UA clients 350 that the server function is restricted.

### <F. Functional Configuration of Controller 100>

Referring to FIG. 7, the functions of the controller 100 are explained. FIG. 7 illustrates an example of a functional configuration of the controller 100.

The controller 100 includes an external communication interface 101, the program execution section 103, a resource manager 130, an event management section 132, a tool interface 135, a nonvolatile memory 136, a driver 137, the LED 138, a memory card interface 139 and the OPC-UA server 150. The OPC-UA server 150 includes an OPC-UA communication stack 151, a main program 153 and a memory monitoring program 155.

The external communication interface 101 communicates with the OPC-UA clients 350A and 350B being the external machine 300. For the external communication interface 101, for example, EtherNet (registered trademark) is adopted. In addition, the external communication interface 101 communicates with the support device 400. "Sysmac Studio" being a development tool of the control program 112, for example, is installed on the support device 400. The control program 112 designed on the development tool is installed on the controller 100 via the external communication interface 101. In addition, error information or log data of the controller 100 is sent to the support device 400 via the external communication interface 101.

The resource manager 130 retains address information of each variable in the controller 100 and is responsible for managing each variable, or reading/writing each variable, and so on. As an example, when receiving an order to read (acquire) a variable, the resource manager 130 accesses the variable to be read and sends the variable to a source that issued the read order. In addition, when receiving an order to write a variable, the resource manager 130 accesses the variable to be written and rewrites the variable to a designated value. The variables managed by the resource manager 130 include the variables in the control program 112, a system variable 131 indicating the state of the controller 100, and so on.

The event management section 132 executes processing corresponding to an event that occurs in the controller 100. In one aspect, the event management section 132 outputs a warning when detecting an event indicating that the usage of the memory 106 is about to reach the upper limit. The event is issued based on the fact that the usage of the memory 106 has exceeded the threshold th2 (see FIG. 6). The warning is output in an arbitrary mode. As an example, the warning is output by writing the content of the warning as a log to the nonvolatile memory 136. Alternatively, the warning is output by writing the content of the warning as a log to the memory card 140 via the driver 137. Alternatively, the warning is output by lighting the LED 138 via the driver 137. Alternatively, the warning is output by rewriting the system variable 131 to a warning state.

In another aspect, the event management section 132 outputs a memory error when detecting an event indicating that the usage of the memory 106 has reached the upper limit. The event is issued based on the fact that the usage of the memory 106 has exceeded the threshold th1 (see FIG. 6). The memory error is output in an arbitrary mode. As an example, the memory error is output by being written as a log to the nonvolatile memory 136. Alternatively, the memory error is output by being written as a log to the memory card 140 via the driver 137. Alternatively, the memory error is output by lighting the LED 138 via the driver 137. Alternatively, the memory error is output by rewriting the system variable 131 to a memory error state.

The driver 137 is software for normally operating the LED 138 or the memory card interface 139. The memory card interface 139 is a socket for removing and installing the memory card 140.

The OPC-UA communication stack 151 temporarily retains data to be sent to the OPC-UA clients 350 or data received from the OPC-UA clients 350. The main program 153 is software for realizing the communication control function performed by the above function execution section 152 (see FIG. 1) or the server stop function performed by the above restriction section 156 (see FIG. 1). The memory monitoring program 155 is software for the monitoring section 154 to realize the function of monitoring the usage of the memory 106.

### <G. Hardware Configuration of Controller 100>

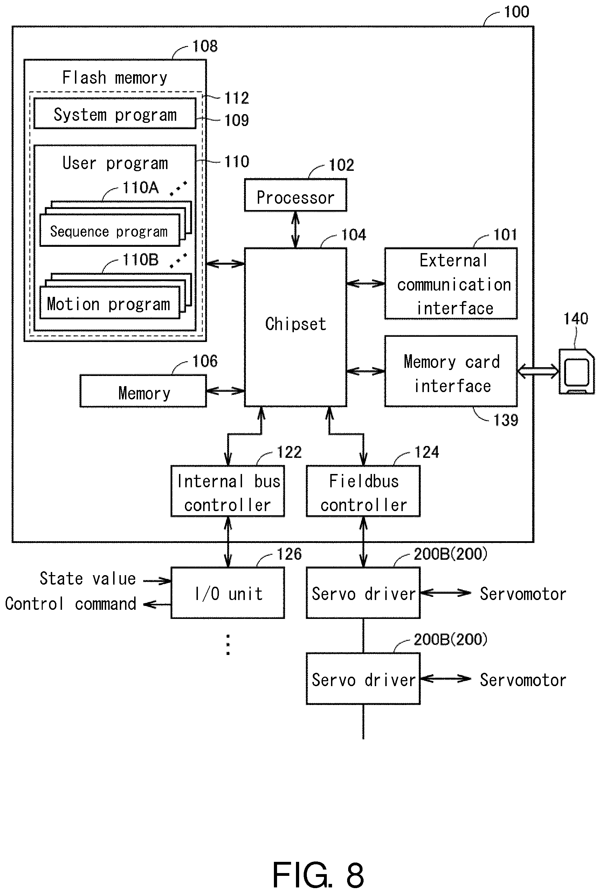

Referring to FIG. 8, a hardware configuration of the controller 100 is explained. FIG. 8 is a schematic diagram illustrating an example of the hardware configuration of the controller 100.

The controller 100 includes the external communication interface 101, the processor 102 such as a central processing unit (CPU) or a microprocessing unit (MPU) or the like, a chipset 104, the memory 106 as a main memory, a flash memory 108, an internal bus controller 122, a fieldbus controller 124 and the memory card interface 139.

The processor 102 reads the control program 112 stored in the flash memory 108 and extracts and executes the control program 112 in the memory 106, thereby realizing arbitrary control over the servo driver 200B or the like being an example of the driving machine 200. The control program 112 includes various programs for controlling the controller 100. As an example, the control program 112 includes a system program 109 and a user program 110 and so on. The system program 109 includes order codes for providing basic functions of the controller 100, such as data input/output processing or control of execution timing and so on. The user program 110 is arbitrarily designed according to a control object, and includes a sequence program 110A for executing sequence control and a motion program 110B for executing motion control. The control program 112 is, for example, a PLC program written in ladder language or structured text (ST) language.

The chipset 104 realizes processing as the entire controller 100 by controlling each component.

The internal bus controller 122 is an interface for the controller 100 to exchange data with various devices connected to the controller 100 through an internal bus. As an example of such devices, an input/output (I/O) unit 126 is connected to the controller 100.

The fieldbus controller 124 is an interface for the controller 100 to exchange data with various devices connected to the controller 100 through a fieldbus. As an example of such devices, the servo driver 200B is connected to the controller 100. In addition, the robot controller 200A (see FIG. 1) or the visual sensor 200C (see FIG. 1) or the like may also be connected to the controller 100.

The internal bus controller 122 and the fieldbus controller 124 are capable of giving an arbitrary command to a connected device, and capable of acquiring arbitrary data (including measured values) managed by the device. In addition, the internal bus controller 122 and/or the fieldbus controller 124 also functions as an interface for exchanging data with the servo driver 200B.

The external communication interface 101 controls data exchange through various wired/wireless networks. The memory card interface 139 is configured to allow the memory card 140 (for example, a Secure Digital (SD) card) being an example of the external memory medium to be installed thereon and removed therefrom, so that data can be written to and read from the memory card 140.

### <H. Control Structure of Controller 100>

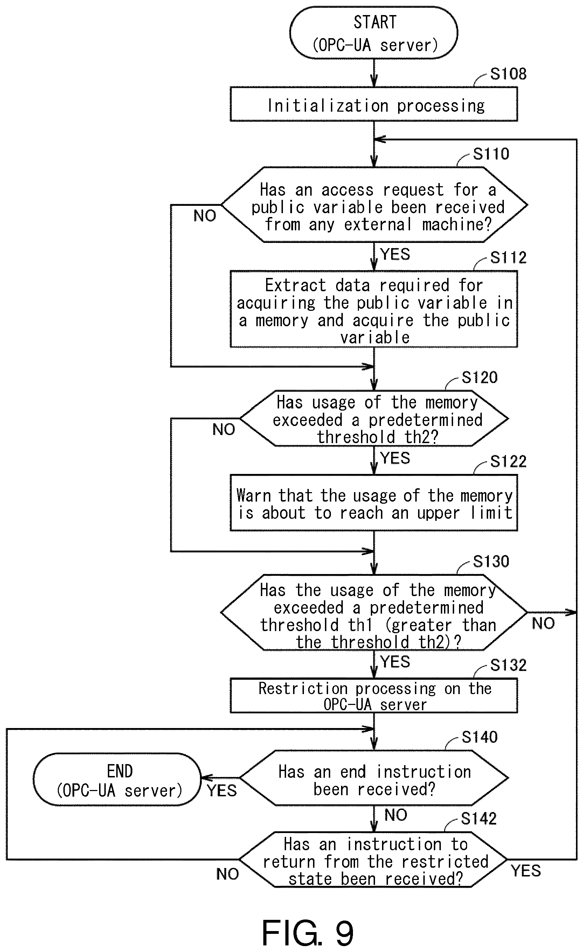

Referring to FIG. 9, a control structure of the controller 100 is explained. FIG. 9 is a flowchart indicating part of processing realized by the OPC-UA server 150 in the controller 100. The processing shown in FIG. 9 is realized by executing a program by the processor 102 of the controller 100. In another aspect, part or all of the processing may be executed by a circuit element or the other hardware.

In step S108, the processor 102 executes initialization processing with respect to the OPC-UA server 150. The initialization processing includes, for example, processing that extracts a public variable in the memory 106 and renders the public variable accessible from the external machine 300, and so on.

In step S110, as the above function execution section 152 (see FIG. 1), the processor 102 determines whether or not an access request for the public variable has been received from any of the external machine 300. If determining that the access request for the public variable has been received from any of the external machine 300 (YES in step S110), the processor 102 switches the control to step S112. Otherwise (NO in step S110), the processor 102 switches the control to step S120.

In step S112, the processor 102 extracts in the memory 106 various data required for acquiring the public variable designated by the access request received in step S110, and accesses the public variable. As an example, in the case where the processor 102 receives a "Subscription request," the processor 102 prepares, in the memory 106, an object having a function of regularly sending the designated public variable to the external machine 300 that sent the access request. The Subscription processing is as explained in FIG. 3 and FIG. 4 and thus the explanation thereof will not be repeated.

In step S120, as the above monitoring section 154 (see FIG. 1), the processor 102 determines whether or not the usage of the memory 106 has exceeded the predetermined threshold th2 (see FIG. 6). The threshold th2 may be set in advance or may be arbitrarily set by the user. If determining that the usage of the memory 106 has exceeded the predetermined threshold th2 (YES in step S120), the processor 102 switches the control to step S122. Otherwise (NO in step S120), the processor 102 switches the control to step S130.

In step S122, the processor 102 outputs a warning indicating that the usage of the memory 106 is about to reach the upper limit. The warning is output by an arbitrary method. As an example, the processor 102 may output the warning as a log to the memory card 140 (see FIG. 7) or the like, or may output the warning by lighting the LED 138 (see FIG. 7) or the like, or may output the warning by sound. In addition, the processor 102 may provide no warning notification to the external machine 300.

In step S130, the processor 102 determines whether or not the usage of the memory 106 has exceeded the predetermined threshold th1 (see FIG. 6). The threshold th1 is greater than the threshold th2. The threshold th1 may be set in advance or may be arbitrarily set by the user. If determining that the usage of the memory 106 has exceeded the predetermined threshold th1 (YES in step S130), the processor 102 switches the control to step S132. Otherwise (NO in step S130), the processor 102 returns the control to step S110.

In step S132, as the above restriction section 156 (see FIG. 1), the processor 102 restricts the server function of the OPC-UA server 150. Examples of such restriction processing include the processing that causes the state of the OPC-UA server 150 to transit from normal state to abnormal state, or the processing that makes an error response to the access request made by the external machine 300 toward the OPC-UA server 150, or the processing (shutdown processing) that stops the server function performed by the OPC-UA server 150, and so on. At this moment, the processor 102 does not stop execution of the control program 112 of the driving machine 200. The processor 102 may stop the server function in the OPC-UA server 150 after the memory region on the memory 106 that has been used by the OPC-UA server 150 is released.

In step S140, the processor 102 determines whether or not an end instruction on the server function has been received. If determining that the end instruction on the server function has been received (YES in step S140), the processor 102 stops the OPC-UA server 150, ending the processing shown in FIG. 9. If no determination is made that the end instruction on the server function has been received (NO in step S140), the processor 102 switches the control to step S142.

In step S142, as the above restriction section 156, the processor 102 determines whether or not a return instruction has been received. The return instruction is issued based on, for example, the fact that the support device 400 has re-transferred the settings to the controller 100, or the like. If determining that the return instruction has been received (YES in step S142), the processor 102 returns the control to step S108. By executing the initialization processing again in step S108, the restriction on the server function is removed. The removal processing includes, for example, processing that causes the state of the OPC-UA server 150 to transit from abnormal state to normal state, and so on. If no determination is made that the return instruction has been received (NO in step S142), the processor 102 returns the control to step S140.

### <1. Conclusion>

In the above manner, the controller 100 includes the OPC-UA server 150 for realizing communication with the external machine 300 functioning as the OPC-UA clients 350. Based on receipt of the access request for the variable of the control program 112 from any of the external machine 300, the OPC-UA server 150 executes processing for acquiring the public variable designated by the access request by utilizing a portion of the memory region of the memory 106, and sends the value of the variable to the external machine 300 that sent the access request. Hence, as the access requests from the external machine 300 increase, the usage of the memory 106 increases.

The OPC-UA server 150 monitors the usage of the memory 106, and based on the fact that the usage has exceeded the predetermined threshold, executes the processing for restricting the server function utilizing the memory 106. Accordingly, the server function of the OPC-UA server 150 is restricted. Since the controller 100 only restricts the server function of the OPC-UA server 150, execution of the control program 112 is not stopped. Accordingly, the controller 100 is capable of restricting the server function without affecting the driving machine 200 in the case where the usage of the memory 106 is increased.

### [Description of Reference Numerals]

100: Controller; 101: external communication interface; 102: processor; 103: program execution section; 104: chipset; 106: memory; 108: flash memory; 109: system program; 110: user program; 110A: sequence program; 110B: motion program; 111: variable; 112: control program; 122: internal bus controller;, 124: fieldbus controller; 126: I/O unit; 130: resource manager; 131: system variable; 132: event management section; 135: tool interface; 136: nonvolatile memory; 137: driver; 139: memory card interface; 140: memory card; 150: OPC-UA server; 151: OPC-UA communication stack; 152: function execution section; 153: main program; 154: monitoring section; 155: memory monitoring program; 156: restriction section; 200: driving machine; 200A: robot controller; 200B: servo driver: 200C: visual sensor; 201A: arm robot; 201B: servomotor; 300: external machine; 350A, 350B and 350C: OPC-UA client; 352: Subscription object; 354A to 354C: Queue object; 356A to 356C: Monitored Item object; 400: support device; 401: setting screen.

## Claims

1. A control device (100) for controlling a driving machine (200), the control device (100) having a server section (150) configured for communicating with one or more external machines (300), wherein the control device (100) comprises:
a memory (106);
a program execution section (103) configured for, based on receipt of an order to execute a control program (112) of the driving machine (200), extracting in the memory data required for executing the control program (112), and controlling the driving machine (200) in accordance with the control program (112);
a function execution section (152) configured for executing a function of the server section (150) utilizing a memory region on the memory (106) in response to a request from the one or more external machines (300); and
a monitoring section (154) configured for monitoring usage of the memory (106); the control device (100) being **characterized in** further comprising
a restriction section (156), wherein the monitoring section (154) is configured for regularly outputting the usage to the restriction section (156) and wherein the restriction section (156) is configured for, based on a determination that the usage has exceeded a predetermined first threshold, executing processing for restricting the function of the server section (150) and thus execution of the control program (112) is maintained.

2. The control device (100) according to claim 1, wherein the restriction section (156) is configured for restricting the function of the server section (150) after the memory region on the memory (106) that has been used by the server section (150) is released.

3. The control device (100) according to any of claims 1 to 2, wherein the control device (100) is configured to be electrically connectable to an external memory medium (140), and the restriction section (156) is configured to write to the external memory medium (140), as a log, the fact that the function of the server section (150) is restricted.

4. The control device (100) according to any of claims 1 to 3, wherein, based on the fact that the usage has exceeded a second threshold smaller than the first threshold, the restriction section (156) is configured to output a warning.

5. The control device (100) according to any of claims 1 to 4, wherein the server section (150) is configured to communicate with the one or more external machines (300) by utilizing a communication protocol in accordance with an Object Linking and Embedding for Process Control Unified Architecture.

6. The control device (100) according to any of claims 1 to 5, wherein, based on receipt of an instruction to remove the restriction on the function of the server section (150), the restriction section (156) is configured to remove the restriction.

7. A control method for a control device (100) of a driving machine (200), the control device (100) comprising a server section (150) for communicating with one or more external machines (300), wherein the control method comprises:
based on receipt of an order to execute a control program (112) of the driving machine (200), extracting in a memory (106) of the control device (100) data required for executing the control program (112), and controlling the driving machine (200) in accordance with the control program (112); and
executing a function in the server section (150) utilizing a memory region on the memory (106) in response to a request from the one or more external machines (300);
monitoring usage of the memory (106); the control method being **characterized in** further comprising:
regularly outputting the usage to a restriction section (156) of the control device and, based on a determination that the usage has exceeded a predetermined first threshold, executing processing for restricting the function of the server section (150) by the restriction section (156); and
thus execution of the control program (112) is maintined.

8. A program comprising instructions which, when executed by a control device of a driving machine, causes the control device to carry out the method of claim 7.

## Patentansprüche

1. Steuervorrichtung (100) zum Steuern einer Antriebsmaschine (200), wobei die Steuervorrichtung (100) einen Serverabschnitt (150) konfiguriert zum Kommunizieren mit einer oder mehreren externen Maschinen (300) aufweist, wobei die Steuervorrichtung (100) umfasst:
einen Speicher (106);
einen Programmausführungsabschnitt (103), konfiguriert um, basierend auf dem Empfang eines Befehls zum Ausführen eines Steuerprogramms (112) der Antriebsmaschine (200), in dem Speicher Daten zu extrahieren, die zur Ausführung des Steuerprogramms (112) erforderlich sind, und die Antriebsmaschine (200) gemäß dem Steuerprogramm (112) zu steuern;
einen Funktionsausführungsabschnitt (152) konfiguriert zum Ausführen einer Funktion des Serverabschnitts (150) unter Verwendung eines Speicherbereichs auf dem Speicher (106) in Reaktion auf eine Anfrage von der einen oder den mehreren externen Maschinen (300); und
einen Überwachungsabschnitt (154) konfiguriert zum Überwachen der Nutzung des Speichers (106); wobei die Steuervorrichtung (100) **dadurch gekennzeichnet ist, dass** sie ferner umfasst:
einen Beschränkungsabschnitt (156), wobei der Überwachungsabschnitt (154) konfiguriert ist, um die Nutzung regelmäßig an den Beschränkungsabschnitt (156) auszugeben, und wobei der Beschränkungsabschnitt (156) konfiguriert ist, um basierend auf einer Bestimmung, dass die Nutzung einen vorbestimmten ersten Schwellenwert überschritten hat, eine Verarbeitung zum Beschränken der Funktion des Serverabschnitts (150) auszuführen, und somit die Ausführung des Steuerprogramms (112) aufrechterhalten wird.

2. Steuervorrichtung (100) gemäß Anspruch 1, wobei der Beschränkungsabschnitt (156) konfiguriert ist, um die Funktion des Serverabschnitts (150) einzuschränken, nachdem der Speicherbereich auf dem Speicher (106), der von dem Serverabschnitt (150) verwendet wurde, freigegeben wurde.

3. Steuervorrichtung (100) gemäß irgendeinem der Ansprüche 1 bis 2, wobei die Steuervorrichtung (100) konfiguriert ist, um mit einem externen Speichermedium (140) elektrisch verbindbar zu sein, und
der Beschränkungsabschnitt (156) konfiguriert ist, um die Tatsache, dass die Funktion des Serverabschnitts (150) eingeschränkt ist, als ein Protokoll in das externe Speichermedium (140) zu schreiben.

4. Steuervorrichtung (100) gemäß irgendeinem der Ansprüche 1 bis 3, wobei der Beschränkungsabschnitt (156) konfiguriert ist, um aufgrund der Tatsache, dass die Nutzung einen zweiten Schwellenwert, der kleiner als der erste Schwellenwert ist, überschritten hat, eine Warnung auszugeben.

5. Steuervorrichtung (100) gemäß irgendeinem der Ansprüche 1 bis 4, wobei der Serverabschnitt (150) konfiguriert ist, um mit der einen oder den mehreren externen Maschinen (300) unter Verwendung eines Kommunikationsprotokolls gemäß einer Object Linking and Embedding for Process Control Unified Architecture zu kommunizieren.

6. Steuervorrichtung (100) gemäß irgendeinem der Ansprüche 1 bis 5, wobei der Beschränkungsabschnitt (156) konfiguriert ist, um basierend auf dem Empfang einer Anweisung zur Aufhebung der Beschränkung der Funktion des Serverabschnitts (150), die Beschränkung aufzuheben.

7. Steuerungsverfahren für eine Steuervorrichtung (100) einer Antriebsmaschine (200), wobei die Steuervorrichtung (100) einen Serverabschnitt (150) zum Kommunizieren mit einer oder mehreren externen Maschinen (300) umfasst, wobei das Steuerungsverfahren umfasst:
basierend auf dem Empfang eines Befehls zum Ausführen eines Steuerprogramms (112) der Antriebsmaschine (200), Extrahieren von Daten in einem Speicher (106) der Steuervorrichtung (100), die zum Ausführen des Steuerprogramms (112) erforderlich sind, und Steuern der Antriebsmaschine (200) in Übereinstimmung mit dem Steuerprogramm (112); und
Ausführen einer Funktion in dem Serverabschnitt (150), die einen Speicherbereich auf dem Speicher (106) verwendet, als Reaktion auf eine Anfrage von der einen oder den mehreren externen Maschinen (300);
Überwachen der Nutzung des Speichers (106); wobei das Steuerverfahren **dadurch gekennzeichnet ist, dass** es ferner umfasst:
regelmäßiges Ausgeben der Nutzung an einen Beschränkungsabschnitt (156) der Steuervorrichtung und, basierend auf einer Bestimmung, dass die Nutzung einen vorbestimmten ersten Schwellenwert überschritten hat, Ausführen einer Verarbeitung zum Beschränken der Funktion des Serverabschnitts (150) durch den Beschränkungsabschnitt (156); und
somit Aufrechterhalten der Ausführung des Steuerprogramms (112).

8. Programm umfassend Anweisungen, das bei Ausführung durch eine Steuervorrichtung einer Antriebsmaschine die Steuervorrichtung veranlasst, das Verfahren nach Anspruch 7 auszuführen.

## Revendications

1. Dispositif de commande (100) pour commander une machine d'entraînement (200), le dispositif de commande (100) ayant une section de serveur (150) configurée pour communiquer avec une ou plusieurs machines externes (300), dans lequel le dispositif de commande (100) comprend :
une mémoire (106) ;
une section d'exécution de programme (103) configurée pour, sur la base d'une réception d'un ordre d'exécution d'un programme de commande (112) de la machine d'entraînement (200), l'extraction, dans la mémoire, de données nécessaires pour exécuter le programme de commande (112), et la commande de la machine d'entraînement (200) en fonction du programme de commande (112) ;
une section d'exécution de fonction (152) configurée pour l'exécution d'une fonction de la section de serveur (150) en utilisant une région de mémoire sur la mémoire (106) en réponse à une demande des une ou plusieurs machines externes (300) ; et
une section de surveillance (154) configurée pour la surveillance d'une utilisation de la mémoire (106) ;
le dispositif de commande (100) étant **caractérisé en ce qu'**il comprend en outre :
une section de restriction (156), dans lequel la section de surveillance (154) est configurée pour la délivrance régulière de l'utilisation à la section de restriction (156) et dans lequel la section de restriction (156) est configurée pour, sur la base d'une détermination que l'utilisation a dépassé un premier seuil prédéterminé, l'exécution d'un traitement pour la restriction de la fonction de la section de serveur (150) et ainsi l'exécution du programme de commande (112) est maintenue.

2. Dispositif de commande (100) selon la revendication 1, dans lequel la section de restriction (156) est configurée pour la restriction de la fonction de la section de serveur (150) après la libération de la région de mémoire sur la mémoire (106) qui a été utilisée par la section de serveur (150).

3. Dispositif de commande (100) selon la revendication 1 à 2, dans lequel le dispositif de commande (100) est configuré pour pouvoir être relié électriquement à un support de mémoire externe (140), et
la section de restriction (156) est configurée pour l'écriture sur le support de mémoire externe (140), en tant qu'un journal, du fait que la fonction de la section de serveur (150) est restreinte.

4. Dispositif de commande (100) selon l'une quelconque des revendications 1 à 3, dans lequel, sur la base du fait que l'utilisation a dépassé un deuxième seuil plus petit que le premier seuil, la section de restriction (156) est configurée pour délivrer un avertissement.

5. Dispositif de commande (100) selon l'une quelconque des revendications 1 à 4, dans lequel la section de serveur (150) est configurée pour communiquer avec les une ou plusieurs machines externes (300) par l'utilisation d'un protocole de communication en fonction d'une liaison et incorporation d'objets pour architecture unifiée de commande de processus.

6. Dispositif de commande (100) selon l'une quelconque des revendications 1 à 5, dans lequel, sur la base d'une réception d'une instruction de suppression de la restriction sur la fonction de la section de serveur (150), la section de restriction (156) est configurée pour supprimer la restriction.

7. Procédé de commande pour un dispositif de commande (100) d'une machine d'entraînement (200), le dispositif de commande (100) comprenant une section de serveur (150) pour communiquer avec une ou plusieurs machines externes (300), dans lequel le procédé de commande comprend :
sur la base d'une réception d'un ordre d'exécution d'un programme de commande (112) de la machine d'entraînement (200), l'extraction, dans une mémoire (106) du dispositif de commande (100), de données nécessaires pour exécuter le programme de commande (112), et la commande de la machine d'entraînement (200) en fonction du programme de commande (112) ; et
l'exécution d'une fonction dans la section de serveur (150) en utilisant une région de mémoire sur la mémoire (106) en réponse à une demande des une ou plusieurs machines externes (300) ;
la surveillance d'une utilisation de la mémoire (106) ; le procédé de commande étant **caractérisé en ce qu'**il comprend en outre :
la délivrance régulière de l'utilisation à une section de restriction (156) du dispositif de commande et, sur la base d'une détermination que l'utilisation a dépassé un premier seuil prédéterminé, l'exécution d'un traitement pour la restriction de la fonction de la section de serveur (150) par la section de restriction (156) ; et
ainsi l'exécution du programme de commande (112) est maintenue.

8. Programme comprenant des instructions qui, lorsqu'elles sont exécutées par un dispositif de commande d'une machine d'entraînement, amènent le dispositif de commande à réaliser le procédé selon la revendication 7.
